# EUROPEAN PATENT APPLICATION

(11) **EP 0 823 216 A2**
(43) Date of publication of application: **11.02.1998**
(21) Application number: 97113386.3
(22) Date of filing: 04.08.1997
(51) Int. Cl.: A23L 1/182

(54) **A process for the production of a risotto mix**

(30) Priority: 06.08.1996 IT TO960681
(71) Applicant: F. & P. Rice S.A., 6900 Lugano (CH)
(72) Inventor: Preve, Mario, 6900 Lugano (CH)
(74) Representative: Rambelli, Paolo

(57) **Abstract**

A process for the production of a risotto mix which is ready for use for the preparation of a flavoured risotto by boiling in water without the need for the addition of further flavourings, characterised in that it comprises the steps of:
a) providing a flavouring composition including an aqueous vehicle and one or more flavouring substances,
b) adding a predetermined quantity of rice grains to the flavouring composition such that the quantity of aqueous vehicle in the flavouring composition is sufficient to hydrate the quantity of rice added to a moisture content of between 20% and 60% by weight,
c) maintaining the rice under agitation in the flavouring composition at a temperature of between 20°C and 80°C for a time sufficient to hydrate the rice grains to a moisture content of between 20% and 60% by weight, and
d) dehydrating the rice grains thus hydrated to a constant moisture content of no more than 14% by weight by heating the rice to a temperature no higher than 90°C.

## Description

The present invention relates to a process for the production, particularly on an industrial scale, of a risotto mix which is ready for use in the preparation of a flavoured risotto by boiling in water without the need for the addition of further flavourings.

Risotto mixes, or preparations, are known which include white rice or parboiled rice and a powdered flavouring in a single package. Such preparations are used particularly in the home for the preparation of risottos by boiling with a predetermined quantity of water.

A problem with these mixes lies in the fact that, in order to achieve the intended result, it is necessary for the consumer to use the entire contents of a package, the quantity of powdered flavouring in the package being related to the quantity of rice therein. If only some of the contents of the package are used, this does not give the consumer the optimum ratio of rice to flavouring.

Recently risotto mixes have been made which are constituted, essentially, by pre-seasoned rice grains in which the individual rice grains contain a flavouring. These preparations are obtained by a process which requires the preparation of a risotto by conventional cooking in the presence of the flavouring and subsequent dehydration of the cooked product. Such preparations are undoubtedly advantageous since the individual rice grains include the desired quantity of flavouring needed to give a risotto with the same characteristics even when only some of the contents of the package are used.

The object of the present invention is to provide an improved process for the production, particularly on an industrial scale, of a risotto mix of the type mentioned above.

A further object of the invention is to provide a novel risotto mix having improved properties.

For this purpose, the subject of the invention is a process characterised in that it comprises the steps of:
a) providing a flavouring composition including an aqueous vehicle and one or more flavouring substances,
b) adding a predetermined quantity of rice grains to the flavouring composition such that the quantity of aqueous vehicle in the flavouring composition is sufficient to hydrate the quantity of rice added to a moisture content of between 20% and 60% by weight,
c) maintaining the rice under agitation in the flavouring composition at a temperature of between 20°C and 80°C for a time sufficient to hydrate the rice grains to a moisture content of between 20% and 60% by weight, and
d) dehydrating the rice grains thus hydrated to a constant moisture content of no more than 14% by weight by heating the rice grains to a temperature no higher than 90°C.

A further subject of the invention is a risotto mix as obtainable by the above mentioned process.

It has been found that the operational conditions of the process of the invention, in which temperatures in the flavouring-absorption and dehydration steps do not exceed 80°C, provide a substantial improvement in the organoleptic characteristics of the product, improving the flavour and aroma of the risotto obtained from subsequent boiling.

Moreover, the process enables the flavouring to be absorbed more uniformly and homogenously.

The process of the invention also achieves a substantial reduction in the industrial production costs.

The rice used in the process of the invention may be white rice but is preferably a parboiled rice obtained by processes known to experts in the art.

In the preferred embodiment of the invention, the quantity of water in the flavouring composition is predetermined so as not to exceed the quantity needed to achieve the desired degree of hydration of the rice grains. Excess water of the order of 5-10% by weight could however be considered. The degree of hydration of the rice grains, which is generally between 20% and 60% by weight, is preferably between 25% and 45% by weight.

The flavouring composition used may include both flavouring substances which are soluble in the aqueous vehicle and substances which are substantially insoluble in water. Such flavouring substances include substances typically used in the production of traditional risottos. For example, salt, herbs and spices, hydrogenated vegetable fats, yeast extracts, flavour-enhancing agents, animal or vegetable food products in powdered or possibly freeze-dried form may be included in the flavouring composition.

Preferably the flavouring composition has a dry solids content of between 10 and 35% by weight of the total weight of the composition.

In the absorption step, the temperature at which the flavouring composition is generally maintained is, as stated, no higher than 80°C and is preferably between 20°C and 60°C. This process is generally carried out in a container with stirring or agitation, preferably in a container of the type with a scraping stirrer, or within a rotary drum or basin with rotary-arm kneading devices.

The dehydration step, carried out at a temperature of the rice of no higher than 90°C and preferably between 30°C and 60°C, is preferably carried out by the deposition of the hydrated rice on a conveyor belt over which flows a current of heated air or inert gas. It is understood that, in the process of the invention, other dehydrating means, such as microwaves, infrared radiation or radio-frequency radiation could be considered. The process may be carried out continuously or discontinuously.

### Example

A flavouring composition for risotto was prepared comprising 20 litres of water and 5 kg of flavouring ingredients having a water content of about 6%. The composition thus obtained was transferred into a rotary-arm mixer into which 100 kg of parboiled rice with a 14% moisture content were introduced. The mixture obtained was stirred in the mixer at a temperature of about 50°C until all the water available in the flavouring composition had been used up (degree of hydration of about 28%). The mixture was then dried on a conveyor belt in a closed environment in inert gas at a temperature of about 80°C until a residual moisture content of 14% in the rice had been reached.

The obtained risotto mix consists of free flowing individual grains including a flavouring or seasoning absorbed into the grains or coated onto the grains.

## Claims

1. A process for the production of a risotto mix which is ready for use for the preparation of a flavoured risotto by boiling in water without the need for the addition of further flavourings, characterised in that it comprises the steps of:
a) providing a flavouring composition including an aqueous vehicle and one or more flavouring substances,
b) adding a predetermined quantity of rice grains to the flavouring composition such that the quantity of aqueous vehicle in the flavouring composition is sufficient to hydrate the quantity of rice added to a moisture content of between 20% and 60% by weight,
c) maintaining the rice under agitation in the flavouring composition at a temperature of between 20°C and 80°C for a time sufficient to hydrate the rice grains to a moisture content of between 20% and 60% by weight, and
d) dehydrating the rice grains thus hydrated to a constant moisture content of no more than 14% by weight by heating the rice grains to a temperature no higher than 90°C.

2. A process according to Claim 1, in which the rice added to the flavouring composition is a parboiled rice.

3. A process according to Claims 1 or 2, characterised in that the quantity of rice added to the flavouring composition is predetermined such that the quantity of water available in the flavouring composition does not exceed the quantity required to achieve the desired degree of hydration, the absorption step c) being continued until the free water available has been substantially exhausted.

4. A process according to any one of the preceding claims, in which the flavouring composition has a dry solids content of between 10% and 35% by weight.

5. A process according to any one of the preceding claims, in which the flavouring substances in the flavouring composition include herbs, spices, hydrogenated vegetable fats, salt, flavour-enhancing agents, animal or vegetable food products in powdered or freeze-dried form.

6. A process according to any one of Claims 1 to 5, in which the rice grains are hydrated to a degree of hydration of from 25% to 45% by weight.

7. A process according to any one of Claims 1 to 6, in which the temperature in the absorption step c) is from 20°C to 60°C.

8. A process according to any one of Claims 1 to 7, in which the dehydration is effected at a temperature of from 30°C to 60°C.

9. A risotto mix consisting of individual free flowing grains including a flavouring as obtainable by the process of Claim 1.
